# DEMANDE DE BREVET EUROPEEN

(11) **EP 2 740 580 A1**
(43) Date de publication de la demande: **11.06.2014**
(21) Numéro de dépôt: 13188148.4
(22) Date de dépôt: 10.10.2013
(51) Int. Cl.: B29C 49/04, B29C 49/20

(54) **Procédé de fabrication d'un récipient en matière plastique muni d'un col par extrusion-soufflage, et récipient obtenu par ledit procédé**

(30) Priorité: 04.12.2012 FR 1261585
(71) Demandeur: Productions Realisations Plastiques, 01100 Oyonnax (FR)
(72) Inventeur: Goujon, Gérard, 01100 BELLIGNAT (FR)
(74) Mandataire: Cabinet Laurent & Charras

(57) **Abrégé**

Ce procédé de fabrication d'un récipient en matière plastique muni d'un col par extrusionsoufflage, procédé dans lequel on extrude une paraison (3) qui est ensuite projetée par soufflage au moyen d'une canne de soufflage (5) contre les parois d'un moule (4) de forme correspondante à la forme souhaitée dudit récipient, comprend une étape consistant à insérer une bague (7) autour de la canne de soufflage (5) et positionnée de telle sorte à venir au niveau du col du récipient à fabriquer lors de l'opération de soufflage, ladite bague (7) étant destinée à être noyée dans la paroi interne du col afin de former partie de ladite paroi interne.

## Description

### DOMAINE TECHNIQUE

La présente invention concerne un procédé pour la fabrication d'un récipient en matière plastique muni d'un col par extrusion-soufflage. La présente invention concerne également un récipient obtenu par ledit procédé.

### ART ANTERIEUR

Il est bien connu d'utiliser la technique dite de l'extrusion-soufflage pour fabriquer tout type de récipient, notamment en matière plastique. Dans ce procédé, on extrude une paraison qui est introduite dans un moule, ladite paraison étant alors soufflée contre les parois de celui-ci à l'aide d'une canne de soufflage. Cette technique est bien connue de l'homme du métier.

Cependant, lorsque le récipient que l'on souhaite fabriquer est muni d'un col, il n'est pas rare d'observer des défaillances inhérentes à sa structure, et notamment des défauts en termes de résistance et de régularité.

Le col du récipient ainsi obtenu présente souvent l'inconvénient d'être trop souple, d'être irrégulier en son diamètre, susceptible ainsi de générer des problèmes d'étanchéité lors de l'obturation de celui-ci par un bouchon par exemple.

Ces récipients rencontrent également, dans certaines applications, des problèmes de contaminations bactériologiques ou bien encore d'autres problèmes tels que par exemple l'accumulation d'électricité statique, de résistance physique, chimique. (« *Stress cracking* »)

Enfin, lorsque la paroi constitutive du récipient comporte deux couches, respectivement une couche externe et une couche interne, notamment lors de la mise en oeuvre de la technologie « airless », on peut observer des phénomènes de délamination desdites couches, voire des phénomènes de collapse, résultant principalement du mode actuel de réalisation du col.

### EXPOSE DE L'INVENTION

Le problème que se propose de résoudre l'invention est donc de fournir un procédé de fabrication d'un récipient en matière plastique muni d'un col par extrusion-soufflage, qui permette d'obtenir un col apte à conserver ses dimensions tout en ayant une étanchéité optimale lorsque celui-ci est obturé.

Un autre objectif de l'invention est de permettre l'obtention d'un récipient muni d'un col pouvant développer d'autres propriétés telles que la rigidité, la protection bactériologique, des propriétés antistatiques ou autres.

Un autre objectif encore de la présente invention est de s'affranchir des phénomènes de délamination susceptibles d'intervenir en cas de paroi multi-couches.

Pour résoudre les problèmes précités, il a été mis au point un procédé de fabrication par extrusion-soufflage d'un récipient en matière plastique muni d'un col, procédé dans lequel on extrude une paraison qui est introduite dans un moule, ladite paraison étant soufflée contre les parois de celui-ci a l'aide d'une canne de soufflage..

Selon l'invention, le procédé comprend une étape consistant à insérer une bague autour de la canne de soufflage et positionnée de telle sorte à venir au niveau du col du récipient à fabriquer lorsque ladite canne est en position opérationnelle de soufflage, ladite bague étant destinée à être noyée dans la paroi interne du col afin de former partie de ladite paroi interne, ladite bague ne subissant pas de déformation ni de fusion au cours de l'opération de soufflage..

De cette manière, la bague fait ainsi partie intégrante du récipient fabriqué. La bague est noyée dans la paroi interne du col dudit récipient et permet de réduire la déformation dudit col. Cette bague permet en effet de conserver les dimensions et la régularité du col et de lui conférer une étanchéité optimale lorsque celui-ci est obturé.

L'invention concerne également le récipient en matière plastique obtenu par ledit procédé. Selon l'invention, ledit récipient comprend une bague noyée dans la paroi interne de son col, ladite bague formant partie de ladite paroi interne.

Ainsi, le récipient obtenu est muni d'un col dont les risques de déformation sont réduits et dont l'étanchéité est optimale lors de son obturation.

Avantageusement, le diamètre interne de la bague est égal au diamètre interne du col. Cela permet à la bague de faire partie intégrante de la paroi interne du col, sans modifier ses dimensions.

De préférence, la bague comprend sur sa périphérie externe noyée dans la paroi interne du col du récipient, des moyens pour la rétention axiale de ladite bague.

La bague comprend également de préférence, sur sa périphérie externe noyée dans la paroi interne du col du récipient, des moyens s'opposant à la rotation de ladite bague atour de son axe central.

Selon une forme de réalisation particulière, les moyens pour la rétention sont constitués par une nervure annulaire.

Selon une autre forme de réalisation particulière, les moyens s'opposant à la rotation sont constitués par au moins un élément faisant saillie diamétralement de la périphérie de la bague, sur une partie de ladite périphérie.

Avantageusement, la surface d'extrémité supérieure de la bague se trouve à l'affleurement de la surface d'extrémité supérieure du col dudit récipient. De cette manière, on évite tout risque de présence de nids à bactéries pouvant se loger entre la bague et le col.

Dans une autre forme de réalisation particulière, la bague se prolonge sur la totalité de la surface de la paroi interne du col du récipient. Cela permet de pouvoir rigidifier l'ensemble de la paroi interne du col.

Dans une autre forme de réalisation particulière, la bague peut se prolonger au-delà du col à l'intérieur du récipient et être structurée pour permettre une bonne vidange du produit contenu et éviter les inconvénients de collapse d'une poche intérieur ou d'une couche delaminée près de l'orifice de sortie. Cette bague permet egalement de renforcer la couche mince délaminée et d'assurer l'étanchéité entre les couches du récipient au niveau du col. La bague est réalisée dans un matériau différent que celui du récipient. La bague peut notamment être réalisée en matières plastiques, élastomères, caoutchouc, métal, etc.

La bague intègre des composés antiseptiques, et/ou anti bactériologiques, et/ou antistatiques ou d'autres types de composés ayant d'autres propriétés pour répondre à tout type de besoins.

### BREVE DESCRIPTION DES DESSINS

D'autres caractéristiques et avantages de l'invention ressortiront clairement de la description qui en est faite ci-après, à titre indicatif et nullement limitatif, en référence aux figures annexées, dans lesquelles :
- les figures 1 à 3 illustrent schématiquement le procédé connu de l'extrusion soufflage ;
- les figures 4 et 5 illustrent schématiquement le procédé spécifique à une première forme de réalisation de l'invention ;
- les figures 6 à 8 illustrent schématiquement le procédé selon une seconde forme de réalisation de l'invention ;
- la figure 9 est une représentation schématique en perspective de la bague destinée à être noyée dans la paroi interne du col ;
- la figure 10 est une représentation schématique de la bague vue de dessus ;
- la figure 11 est une représentation schématique de la bague vue de face ;
- la figure 12 est une représentation schématique en perspective du récipient selon l'invention obtenu lorsque les deux parties du moule ont été retirés après l'étape illustrée à la figure 5 ;
- la figure 13 est une représentation schématique en coupe longitudinale du récipient selon l'invention ;
- la figure 14 est une représentation schématique en coupe longitudinale illustrant en détail le col du récipient selon l'invention.

### EXPOSE DETAILLE DE L'INVENTION

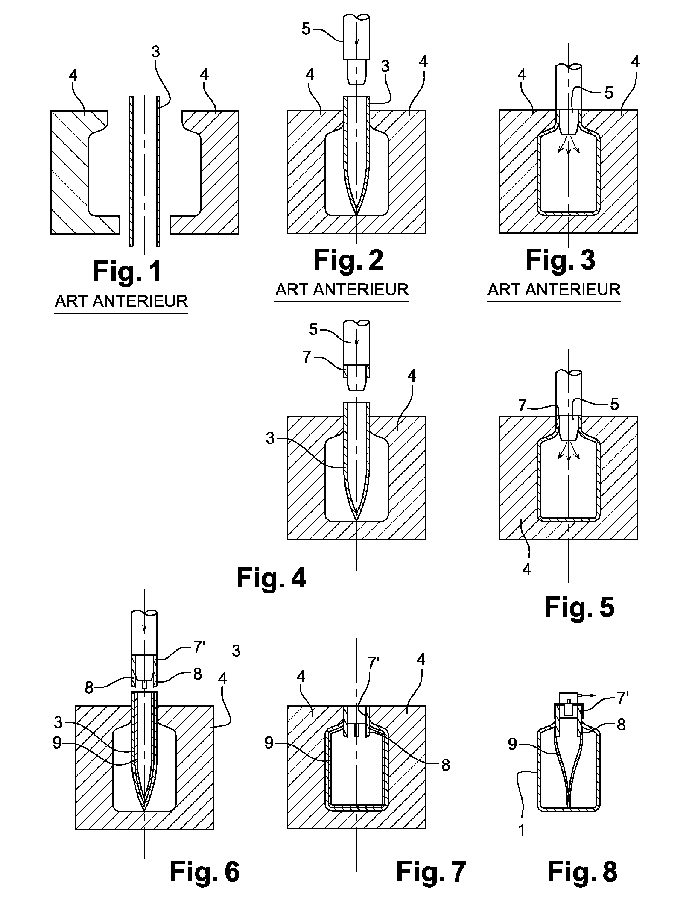

En référence aux figures 1 à 3 qui illustrent le procédé de fabrication d'un récipient (1) en matière plastique muni d'un col (2) par extrusion-soufflage selon l'état antérieur de la technique, un tube extrudé (3) chaud en matière plastique, dit paraison, est pincé à ses extrémités par un moule (4) creux en deux parties d'une forme complémentaire à la forme souhaitée du récipient (1) à réaliser.

L'une des extrémités de la paraison (3), et notamment l'extrémité inférieure se soude sur elle-même, et l'autre s'appuie sur une canne de soufflage (5) par laquelle on admet une pression d'air suffisante pour déformer la paraison (3) chaude, qui vient se plaquer sur la paroi interne du moule (4). Le moule (4) est généralement refroidi par circulation d'eau. Ladite paraison (3) se solidifie alors et peut être démoulée pour former le récipient (1) souhaité.

Ledit procédé d'extrusion-soufflage, mettant en oeuvre une extrudeuse, est bien connu de l'état de la technique et ne sera pas décrit plus en détail.

Selon l'invention, une bague (7) est préalablement insérée autour de la canne de soufflage (5) (figure 4). Cette bague (7) est positionnée de telle sorte à venir se placer au niveau du col (2) du récipient (1) à fabriquer lors de l'opération de soufflage (figure 5). De cette manière, lorsque le procédé d'extrusion-soufflage est terminé, ladite bague (7) est soudée, ou collée dans la paroi interne (2a) du col (2) afin de former partie de ladite paroi interne (2a). En revanche, la bague (7) n'est pas déformée, par exemple en raison d'une fusion même partielle de sa périphérie : elle conserve donc son intégrité physique, nécessaire à promouvoir la résistance mécanique du col qu'elle contribue à définir, afin que celui-ci réponde aux exigences d'étanchéité requises.

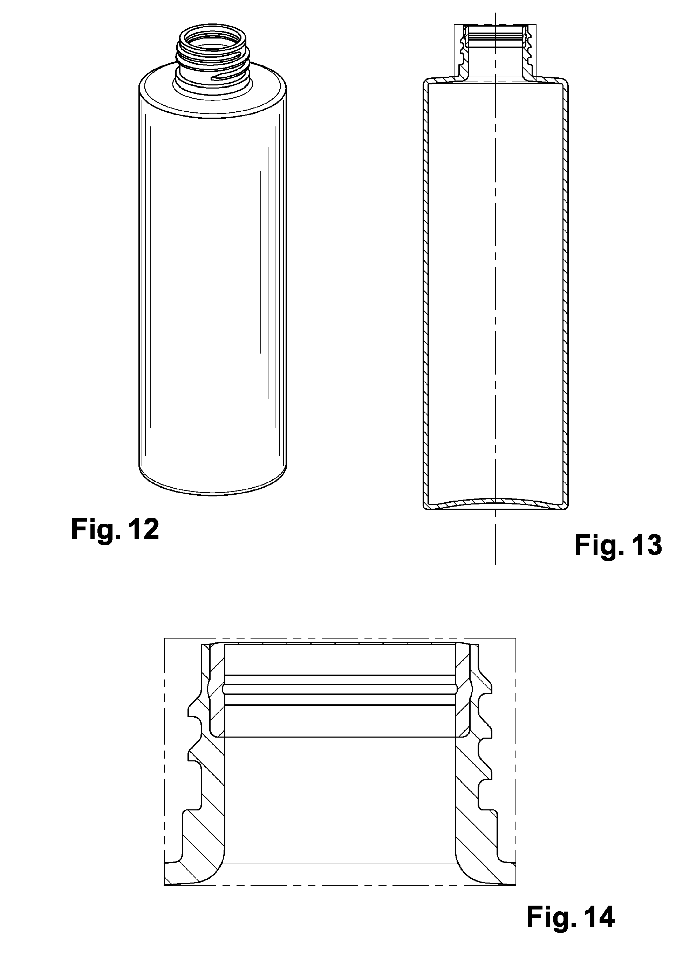

En référence aux figures 12 à 14, le récipient en matière plastique (1) ainsi obtenu est d'une forme souhaitée, correspondant à la forme du moule (4), et est muni d'un col (2). La bague (7) est noyée dans la paroi interne (2a) dudit col (2) et forme une partie de ladite paroi interne (2a).

Selon une caractéristique particulière, l'extrémité supérieure de la bague (7) se trouve à l'affleurement de l'extrémité supérieure du col (2) dudit récipient (1). La bague (7) forme une partie de ladite paroi interne (2a) du col (2) du récipient (1) mais peut se prolonger sur la totalité de la surface de ladite paroi interne (2a).

La bague (7) peut également dépasser à l'intérieur du récipient et être structurée pour permettre une bonne vidange du produit contenu et éviter les inconvénients du collapse d'une poche intérieure ou d'une couche delaminée près de l'orifice de sortie, lorsque par exemple est mis en oeuvre le second mode de réalisation de l'invention illustré en relation avec les figures 6 à 8. Cette bague permet egalement de renforcer la couche fine délaminée et d'assurer l'étanchéité entre les couches du récipient au niveau du col. En effet, lors la réalisation de récipients bicouches, lesdites couches constitutives de leur paroi fond lors de l'opération d'extrusion-soufflage, et la bague permet de conserver la cohésion desdites couches au niveau du col, sans risque de délamination ce niveau.

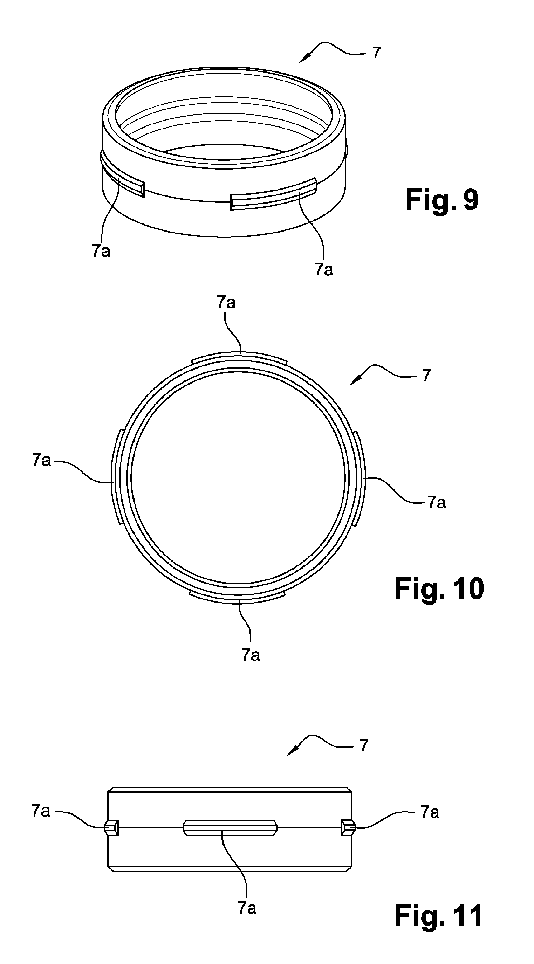

En référence aux figures 9 à 11, la bague (7) est réalisée en tout type de matériau, de préférence en polyéthylène, polyuréthane, ou éthylène-acétate de vinyle. La bague (7) est réalisée en un matériau différent de celui du récipient (1).

La bague (7) peut être de toute forme. Dans la forme de réalisation illustrée aux figures, la bague (7) est de forme générale cylindrique de diamètre interne égal au diamètre interne du col (2) du récipient (1). La bague (7) comprend, pour sa rétention axiale et également pour s'opposer à sa rotation dans le col (2), autour de son axe central, quatre portions (7a) de rainures annulaires périphériques régulièrement réparties et formant saillie par rapport à sa paroi externe.

Cette bague (7) permet notamment de rigidifier le col (2) du récipient (1), et plus particulièrement de conserver ses dimensions, tout en optimisant son étanchéité. La bague (7) permet également de corriger les irrégularités de la paroi interne (2a) du col (2) du récipient (1).

La bague (7) permet en outre de pouvoir conférer tout type de propriétés au col (2) du récipient (1) en fonction des propriétés de la bague (7). En effet, la bague (7) peut comprendre des composés ayant des propriétés anti bactériologiques, antiseptiques, antistatiques etc.

La bague (7) est noyée dans la paroi interne (2a) du col (2) du récipient (1).

Comme déjà indiqué, les figures 6 à 8 illustrent un autre mode de réalisation de l'invention, plus spécifiquement dédié à la technologie « airless », c'est-à-dire la technique permettant d'obtenir un récipient rigide, pour lequel le produit est contenu dans une poche souple, qui se rétracte au fur et à mesure de son utilisation.

Selon ce mode de réalisation, la bague (7') est toujours positionnée sur la canne de soufflage, mais est pourvue de saillies inférieures (8), qui ont vocation à se prolonger à l'intérieur du récipient une fois celui-ci réalisé, et ainsi éviter les phénomènes de collapse ou de délamination de la poche intérieure (9), et donc corollairement, permettent la vidange complète dudit récipient.

Comme il ressort de ce qui précède, l'invention fournit un procédé permettant d'obtenir un récipient (1) muni d'un col (2) dont les dimensions sont conservées et dont l'étanchéité est optimisée lorsque celui-ci est obturé. Le col (2) selon l'invention présente l'avantage de pouvoir répondre à différents de types de besoins en fonction des propriétés de la bague (7) qu'il comprend. L'invention donne entière satisfaction.

## Revendications

1. Procédé de fabrication d'un récipient (1) en matière plastique muni d'un col (2) par extrusion-soufflage, procédé dans lequel on extrude une paraison (3) qui est ensuite projetée par soufflage au moyen d'une canne de soufflage (5) contre les parois d'un moule (4) de forme correspondante à la forme souhaitée dudit récipient (1), ***caractérisé* en ce qu'il** comprend une étape consistant à insérer une bague (7, 7') autour de la canne de soufflage (5) et positionnée de telle sorte à venir au niveau du col (2) du récipient (1) à fabriquer lors de l'opération de soufflage, ladite bague (7, 7') étant destinée à être noyée dans la paroi interne (2a) du col (2) afin de former partie de ladite paroi interne (2a), ladite bague (7, 7) ne subissant aucune déformation ni de fusion lors de l'opération de soufflage.

2. Récipient (1) en matière plastique obtenu par le procédé selon la revendication 1, ***caractérisé* en ce qu'il** comprend une bague (7, 7') noyée au moins en partie dans la paroi interne (2a) du col (2), ladite bague (7, 7') formant partie de ladite paroi interne (2a).

3. Récipient (1) selon la revendication 2, ***caractérisé* en ce que** le diamètre interne de la bague (7, 7') est égal au diamètre interne du col (2).

4. Récipient (1) selon la revendication 2, ***caractérisé* en ce que** la bague (7, 7') comprend sur sa périphérie externe noyée dans la paroi interne (2a) du col (2) du récipient (1), des moyens (7a) pour la rétention axiale de ladite bague (7, 7').

5. Récipient (1) selon la revendication 2, ***caractérisé* en ce que** la bague (7, 7') comprend sur sa périphérie externe noyée dans la paroi interne (2a) du col (2) du récipient (1), des moyens (7a) s'opposant à la rotation de ladite bague (7, 7') atour de son axe central.

6. Récipient (1) selon la revendication 4, ***caractérisé* en ce que** les moyens (7a) pour la rétention sont constitués par une nervure annulaire.

7. Récipient (1) selon la revendication 5, ***caractérisé* en ce que** les moyens (7a) s'opposant à la rotation sont constitués par au moins un élément faisant saillie diamétralement de la périphérie de la bague (7, 7'), sur une partie de ladite périphérie.

8. Récipient (1) selon la revendication 2, ***caractérisé* en ce que** la surface d'extrémité supérieure de la bague (7, 7') se trouve à l'affleurement de la surface d'extrémité supérieure du col (2) dudit récipient (1).

9. Récipient (1) selon la revendication 2, ***caractérisé* en ce que** la bague (7) se prolonge sur la totalité de la surface de la paroi interne (2a) du col (2) du récipient (1).

10. Récipient (1) selon la revendication 2, ***caractérisé* en ce que** la bague (7') se prolonge sur la totalité de la surface de la paroi interne (2a) du col (2) du récipient (1), et même fait saillie (8) à l'intérieur du récipient.

11. Récipient (1) selon la revendication 2, ***caractérisé* en ce que** la bague (7, 7') est réalisée dans un matériau différent que celui du récipient (1).

12. Récipient (1) selon la revendication 11, ***caractérisé* en ce que** la bague (7, 7') est réalisée en un matériau choisi dans le groupe comprenant les matières plastiques, les élastomères, le caoutchouc, le métal.

13. Récipient (1) selon la revendication 11, ***caractérisé* en ce que** la bague (7) intègre des composés antiseptiques, et/ou anti bactériologiques, et/ou antistatiques.
